# EUROPEAN PATENT SPECIFICATION

(11) **EP 0 429 498 B1**
(45) Date of publication and mention of the grant of the patent: **23.03.1994**
(21) Application number: 89909112.8
(22) Date of filing: 01.08.1989
(51) Int. Cl.: B65D 19/32

(54) **PLASTIC PALLET WITH DECK ASSEMBLY**
KUNSTSTOFFPALETTE MIT PLATTENZUSAMMENBAU
PALETTE PLASTIQUE A ASSEMBLAGE DE PLATEAUX

(30) Priority: 09.08.1988 US 230025
(43) Date of publication of application: 05.06.1991
(60) Divisional application: 93114348.1
(73) Proprietor: NUCON CORPORATION, Northfield, IL 60093 (US)
(72) Inventor: PIGOTT, Maurice, J., Winnetka, IL 60093 (US); PIGOTT, Peter, S., Wilmette, IL 60091 (US); PIGOTT, Brandon, L., Wilmette, IL 60091 (US); PIGOTT, Schuyler, F., Arlington Heights, IL 60004 (US)
(74) Representative: Strehl Schübel-Hopf Groening & Partner
(86) International application number: PCT/US89/03314
(87) International publication number: WO 90/01448

(56) References cited:
- FR-A- 2 160 677
- FR-A- 2 259 023
- FR-A- 2 274 512

## Description

The present invention relates to a plastic pallet including a pair of substantially identical decks interconnected by a plurality of connectors with aperture means at at least each corner of said decks receiving said connectors, each deck including a one-piece molded, generally rectangular structure having spaced, generally parallel surfaces. A plastic pallet of this type is known from FR-A-2 160 677.

This reference is related to a plastic pallet consisting of a support frame and a bottom frame being of identical shape, and a plurality of stiffening members being positioned between said frames and having apertures receiving hook members of said frames. Further examples of molded plastic pallets are disclosed in US-A-3 814 031; 3 664 271; 3 610 173; 4 013 021; 4 316 419; 4 597 338 and 4 735 154.

Thus, while a number of plastic pallets have been proposed, these proposed solutions have not been widely accepted and there remains a need for a plastic pallet that is light in weight, durable, capable of supporting heavy loads and is easy to manufacture and have a minimum number of parts that are preferably interchangeable.

According to the present invention, a plastic pallet of the above mentioned known type is characterized by said parallel surfaces being surrounded by peripheral reinforcing means, said peripheral reinforcing means including a plurality of substantially identical hollow rectangular segments defined by opposed end walls and opposed side walls with a connecting wall joining one edge of each of said end and side walls, said connecting wall being inclined with respect to said deck surfaces and having a slope from one said end wall to said other end wall, and reinforcing gussets integral with said connecting wall and respective ones of said opposed side walls.

According to one aspect of the invention, the deck consists of a plurality of substantially identical segments that are repeated throughout the body of the deck between generally planar spaced parallel surfaces.

Each deck is reinforced around the perimeter and has openings at each of the corners thereof. The reinforced perimeter is defined by a plurality of identical segments, each including a pair of end walls and a pair of opposed side walls with one edge of the walls having an integral wall that is located at an angle with respect to the planar surfaces of the deck. Each segment has a drain opening in the bottom wall adjacent one end wall and has reinforcing means located therein. The reinforcing means is in the form of a pair of gussets that are integral with the integral wall and a side wall. The respective gussets, which are triangular, terminate spaced from the opposite side wall to define a flow path from one end of the closed end wall to the drain opening.

### Brief Description of Drawings

FIG. 1 is a perspective view of the plastic pallet constructed in accordance with the teachings of the present invention;
FIG. 2 partial perspective view showing the pallet in a partially assembled condition;
FIG. 3 is a partial perspective view showing the separator tool being used to separate a connector from a deck;
FIG. 4 is a cross-sectional view, as viewed along line 4-4 of FIG. 1;
FIG. 5 is a top perspective view of the connector;
FIG. 6 is a top plan view of the connector;
FIG. 7 is side view of the connector;
FIG. 8 is a cross-sectional view of the connector;
FIG. 9 is a fragmentary perspective view of a plastic pallet which incorporates a novel deck structure;
FIG. 10 is a fragmentary cross-sectional view, taken along line 10-10 of FIG. 9;
FIG. 11 is a fragmentary cross-sectional view, taken along line 11-11 of FIG. 10;
FIG. 12 is a fragmentary plan view, taken along line 12-12 of FIG. 10; and,
FIG. 13 is a cross-sectional view taken along line 13-13 of FIG. 9.

### Detailed Description

While this invention is susceptible of embodiment in many different forms, there is shown in the drawings and will herein be described in detail a preferred embodiment of the invention with the understanding that the present disclosure is to be considered as an exemplification of the principles of the invention and is not intended to limit the broad aspect of the invention to embodiments illustrated.

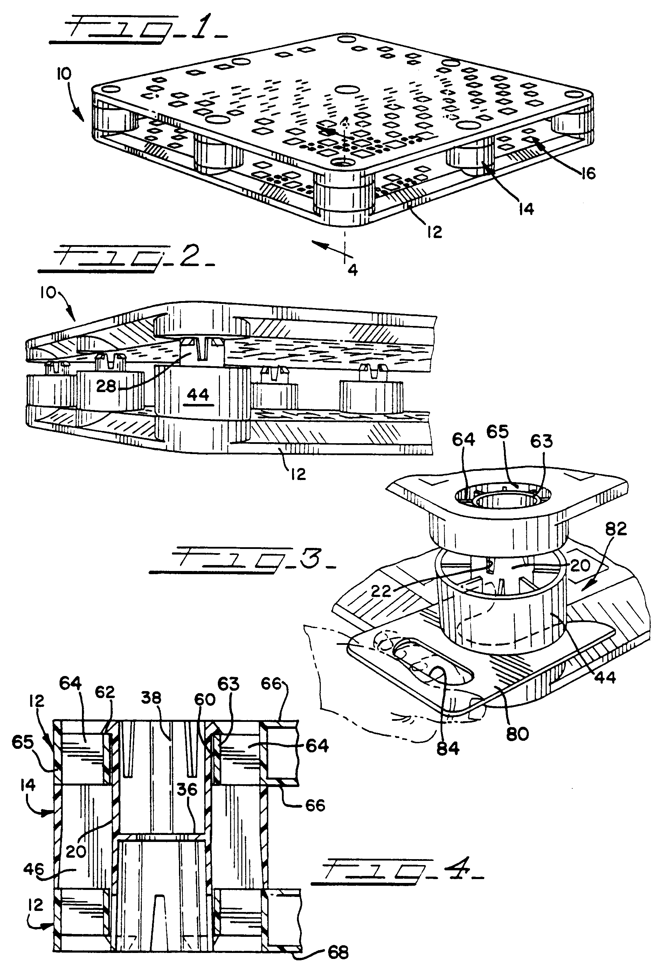

FIG. 1 of the drawings shows a plastic pallet, generally designated by reference numeral 10, and includes a pair of identical rectangular decks or frame members 12 that are interconnected by a plurality of connectors 14. In the illustrated embodiment, nine connectors are shown, which are positioned at the four corners of the frame members and between each of the corners as well as in the center of the frame members. The connectors are positioned so that forklift tine receiving openings 16 are formed between the connectors 14 and the decks 12.

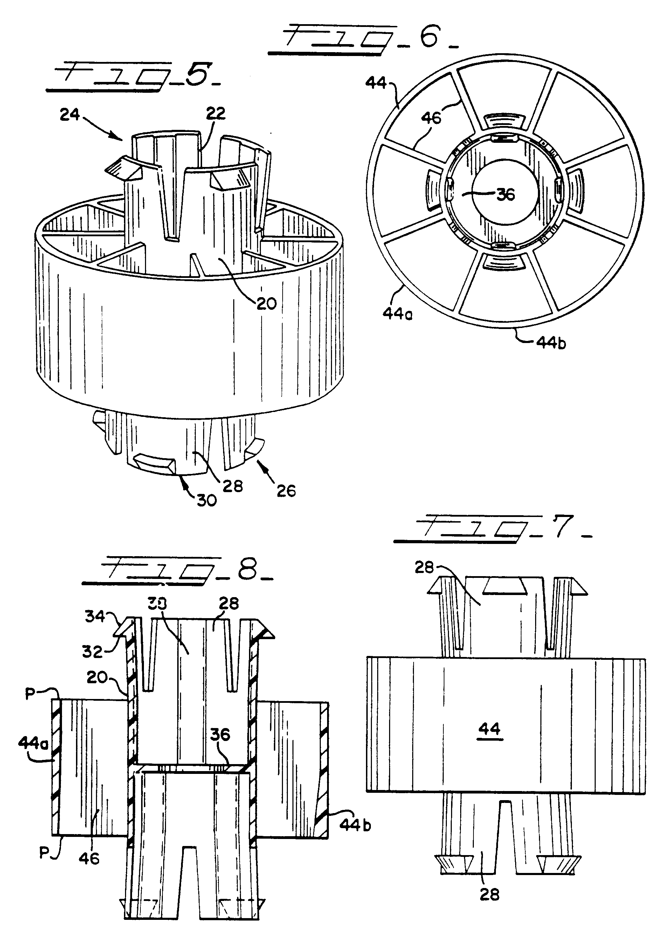

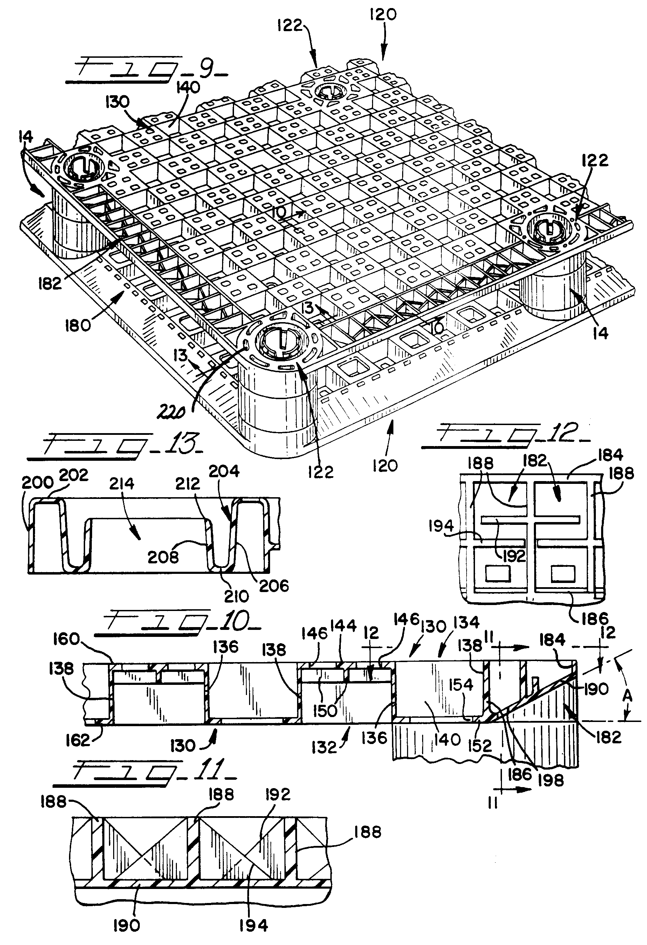

The details of the connectors are illustrated in FIGS. 4-8. As illustrated therein, each connector 14 includes a hollow central circular core 20 that has circumferentially spaced slots 22 extending from opposite ends thereof which produce first and second sets of tangs 24 and 26. Each tang 28 is identical in construction and has a barb 30 (FIG. 8) formed adjacent a free end thereof. Each barb 30 has a flat lower surface 32 which extends perpendicular to the axis of the core and has a tapered surface 34 extending from the outer edge to define a ramp.

In the illustrated embodiment, four tangs are shown on each end of the core with each tang spanning approximately ninety degrees. It should be noted that the tangs of the respective sets on opposite ends of the core are circumferentially offset so that the slots forming one set of tangs are axially aligned with the centers of the opposite set of tangs.

The central core also has a force absorbing flange 36 located at the center thereof, and equally spaced from opposite ends. In addition, each tang has an inner integral reinforcing rib 38 which extends from the flange to the free end and is aligned with the barb 30. Thus, forces applied to the tangs are transmitted by the ribs 38 to the flange 36 where they are dissipated.

Each connector also includes a large circular sleeve 44 that surrounds the core and is connected thereto by radially extending spokes 46. The upper and lower edges of the spokes and the sleeve define planes P which extend perpendicular to the axis of the core, for a purpose to be described later.

The sleeve is configured to absorb large forces without being destructed. Thus, the sleeve has portions 44a and 44b, which are respectively located between alternating pairs of spokes. The sleeve portions 44a and 44b are tapered from one edge to the opposite edge. However, sleeve portion 44a has its thickest portion adjacent the upper edge of the sleeve, as viewed in FIG. 8, while sleeve portion 44b has its thickest portion adjacent a lower edge of the sleeve. Stated another way, the sleeve portions have alternating reverse tapers to increase the strength thereof.

As clearly shown in FIG. 4, each deck or frame member 12 has openings 60 which are adapted to receive tangs 28 and the openings are surrounded by abutments 62 that are recessed below the adjacent surface 66 of the deck means. The abutments 62 are defined by sleeves 63 which are connected by spokes 64 to peripheral members 65. The abutment is spaced from an opposite surface 68 by a dimension equal to the spacing between plane P and the surface 32 of barb 30 so that the barbs will snap into position, as will be described later, and will be located entirely inside the planes P.

To assemble the plastic pallet, the connectors are first assembled to one deck by aligning a set of tangs 24 or 26 with an opening 60 and then applying an axial force which causes the ramps 34 of the barbs to deflect the tangs inwardly sufficient to allow the set of tangs to pass through the openings. After the barb 30 has cleared the abutment surface 62, the elastic memory characteristics of the plastic will snap the tangs back to their original condition and lock the connector to the frame member 12. After all, of the connectors are assembled on one deck, the second deck is positioned as shown in FIG. 2 and a force is applied to the top surface to complete the assembly of the plastic pallet.

In the assembled condition illustrated in FIG. 1, the adjacent connectors will provide an open space 16 for the reception of the tines of a forklift truck (not shown) and the round surfaces of the connector sleeves 44 will tend to guide the tines into the space 16.

A simple tool can be used to separate the connector from the deck. As illustrated in FIG. 3, the tool 80 consists of a main body that has a progressively increasing taper from one end to the opposite end thereof. A slot 82 extends from the pointed end of the main body. The slot has a width that is greater than the diameter of the core 20. The main body also has an opening 84 for gripping by the hand of the user.

In use, the tool is positioned as shown in FIG. 3 and a force is applied to the end to wedge the tool between the plane P of the connector and the adjacent surface of the deck. With sufficient force, the tangs will be deflected inwardly sufficiently to clear the edge of the abutment and allow the connector to be separated from the deck.

The advantages of the tool are apparent. The tool is easy to fabricate at a minimum cost and can be supplied with each pallet order at minimal additional cost. Thereafter, the owner can easily replace defective connectors without discarding any usable components of the pallet.

According to the present invention FIGS. 9-13 show a modified form of pallet assembly incorporating a novel deck assembly that provides significantly increased rigidity while utilizing a minimum amount of plastic material. In the embodiment illustrated specifically in FIG. 9, the connectors 14 are identical in construction to the connectors described above, while the upper and lower decks 120 are identical in construction and are mirror images of each other.

Each deck 120 is generally rectangular and has connector support members 122 at each of the corners thereof, as well as intermediate the respective corners, as shown in greater detail in FIG. 1. Each deck 120 incorporates a plurality of substantially identical segments 130 (FIG. 10) that consist of a pair of generally rectangular open-ended shells 132 and 134. For this purpose, each segment 130 includes an intermediate, generally vertical wall 136 and a pair of end walls 138 interconnected by side walls 140.

In the embodiment illustrated, the shell 132 has a wall 144 that extends between intermediate wall 136 and one end 138 as well as side walls 140. The wall 144 has a plurality of openings 146 that are preferably rectangular, there being four in number. The end wall 144 is reinforced by a pair of integral flanges 150 that define a cross between the respective openings 146 and are integral at opposite ends with the intermediate wall 136, the end wall 138 and the side walls 140.

Likewise, the shell 134 has an integral wall 152 that has a generally rectangular opening 154. The openings 146 and 154 not only provide drainage for the entire deck, but also reduce the amount of plastic material required for forming the deck. The reinforcing flanges 150 are preferably located along the exposed surface 160 of the deck, while the walls 152 are located along the opposite surface 162, which is the non-exposed surface of the deck.

Utilizing substantially identical segments 130 for the formation of the entire deck 120 provides extreme versatility in the overall configuration of the deck by utilizing separate identical mold inserts for the formation of each of the segments 130. Preferably, although not necessarily, the respective deck segments 130 are generally rectangular and are approximately 2 inches in width and approximately 4 inches in length so that each of the shells 132 and 134 are square in cross-section.

According to another aspect of the invention, the deck 120 of the present invention incorporates a novel reinforcing means around the perimeter thereof which substantially increases the rigidity of the deck, particularly when the product is banded to the deck for shipment.

The peripheral reinforcing means is generally designated by reference numeral 180 in FIG. 9 and consists of a plurality of substantially identical segments 182 that are formed integral with each other and are located between the respective adjacent connector support members 122. The details of the peripheral reinforcing segments 182 are shown in FIGS. 11-13 and include a pair of end walls 184 and 186 and a pair of side walls 188. It should be noted that one side wall 188 is a common wall for two adjacent reinforcing segments 182.

The end walls 184 and 186 are joined by an inclined wall 190 which is preferably inclined with respect to deck surface 162 by an angle A, which is preferably on the order of about 27°, although this angle may vary to suit the desires of the ultimate purchaser.

Each of the segments 182 has integral reinforcing means in the form of a pair of triangular gussets 192, 194 that are integral with a side wall 188 and inclined wall 190. As shown in FIG. 12, the respective gussets 192 and 194 terminate short of an opposing wall 188 to define a flow path for any liquid that is received into the open shell. A drain opening 198 is provided in the inclined wall 190 adjacent the lower edge thereof so that any water accumulating in the segments or shells 182 will drain therefrom.

It should be noted that the end wall 138 of one of the adjacent segments 130, which define the body of the deck 120, is a common wall for one end wall 186 for the reinforcing segment 182, as is more clearly shown in FIG. 10. Again, the respective segments 182 are individually produced by a pair of cooperating mold inserts similar to the mold inserts described above and disclosed in the above-reference method and apparatus application.

It should also be noted that the inclined walls 190 define guide surfaces for the tines of a forklift when the decks are assembled with the connectors, shown in FIG. 9.

According to a further aspect of the invention, the connector support members 122 are configured to be easily molded in a single-step molding process and still provide the necessary reinforcement. Thus, as shown in FIG. 13, each support member 122 consists of a generally circular outer annular flange 200 that has an inwardly-directed annular flange 202 formed along one edge thereof. A substantially U-shaped annular member 204 is integral with the inner edge of flange 202 and has an outer leg 206 and an inner leg 208 interconnected by a U-shaped segment 210. The inner leg has an edge 212 surrounding opening 214 which is located below the flange 202 and defines an abutment similar to abutment 62 (FIG. 4) for engaging the shoulder 32 of connector 14. The connector support means 122, specifically the segment 208 and the annular flange 202, have drain openings 220 (FIG. 9).

As indicated above, the two pallet components are preferably injection molded from recycled material, such as polypropylene or similar thermoplastic material. Additionally, a pigment may be added to provide color combinations to suit the customer's needs.

Of course, the size and shape and the number of connectors can be varied without departing from the spirit of the invention. Also, while identical decks have been shown and described, the decks could have different shapes or configurations.

It will be appreciated that the simplicity of the plastic pallet reduces the inventory substantially since only two components are necessary. Also, since the frame member or deck only requires recessed shoulders formed in wells, the molds for producing the large, decks are greatly simplified which reduces the production costs.

The intricate design of the connectors has several distinct advantages. The design is such that all external forces are transmitted to the center of the core, which will withstand the greatest force without destruction. Furthermore, the connectors are configured so that they are formed as one piece in a single stage mold to reduce the cost. Since the connectors and the decks are preferably injection molded from recycled plastic, the costs are further reduced.

Another significant advantage of the plastic pallet is that the connectors can easily be separated should one the connectors become damaged. This can be accomplished by the owner without return of the pallet assembly to the manufacturer.

While the specific embodiments have been illustrated and described, numerous modifications come to mind without departing from the scope of the accompanying Claims.

## Claims

1. A plastic pallet including a pair of substantially identical decks (120) interconnected by a plurality of connectors (14) with aperture means (214) at at least each corner of said decks receiving said connectors, each deck including a one-piece molded, generally rectangular structure having spaced, generally parallel surfaces (160, 162), characterized by said parallel surfaces (160, 162) being surrounded by peripheral reinforcing means (180), said peripheral reinforcing means including a plurality of substantially identical hollow rectangular segments (182) defined by opposed end walls (184, 186) and opposed side walls (188) with a connecting wall (190) joining one edge of each of said end and side walls, said connecting wall (190) being inclined with respect to said deck surfaces (160, 162) and having a slope from one said end wall to said other end wall, and reinforcing gussets (192, 194) integral with said connecting wall and respective ones of said opposed side walls.

2. A plastic pallet as defined in claim 1, further characterized by each of said decks including a plurality of substantially identical hollow segments (130) with each hollow segment including a pair of hollow shells (132, 134) respectively open adjacent respective parallel surfaces.

3. A plastic pallet as defined in claim 2, characterized by each segment consisting of three spaced walls (136, 138) integral with a pair of side walls (140) and a first pair of spaced walls and said side walls having an end wall (144) adjacent a first of said surfaces and a second pair of spaced walls and said side walls having an end wall (152) adjacent a second of said surfaces.

4. A plastic pallet as defined in claims 1, 2 or 3, further characterized by said aperture means (214) including a generally U-shaped annular segment (204) defining an abutment (212) surrounding an opening (214) which receives said connector and connecting means (202) connecting said annular segment (204) along one of said planes (160, 162).

## Patentansprüche

1. Eine Kunststoffpalette, umfassend ein Paar von im wesentlichen identischen Decks (120), die durch eine Mehrzahl von Verbindern (14) miteinander verbunden sind, wobei ein Durchbrechungsmittel (214) zumindest an jeder Ecke der genannten Decks die genannten Verbinder aufnimmt und jedes Deck eine einstückig geformte, im allgemeinen rechtwinklige Konstruktion mit im Abstand angeordneten, im allgemeinen parallelen Oberflächen (160, 162) umfaßt, dadurch gekennzeichnet, daß die parallelen Oberflächen (160, 162) von peripheren Verstärkungen (180) umgeben sind, die genannten peripheren Verstärkungen eine Mehrzahl von im wesentlichen identischen, hohlen, rechtwinkligen Segmenten (182) umfassen, die durch sich gegenüberliegende Endwände (184, 186) und sich gegenüberliegende Seitenwände (188) gebildet sind, wobei eine Verbindungswand (190) einen Rand jeder der genannten End- und Seitenwände verbindet, die genannte Verbindungswand (190) in bezug auf die genannten Deckflächen (160, 162) geneigt ist und eine Neigung von einer genannten Endwand zur genannten anderen Endwand sowie Versteifungsstücke (192, 194) aufweist, die mit der genannten Verbindungswand und einer betreffenden, der genannten, sich gegenüberliegenden Seitenwände einheitlich ausgebildet sind.

2. Kunststoffpalette nach Anspruch 1, ferner gekennzeichnet dadurch, daß jedes der genannten Decks eine Mehrzahl von im wesentlichen identischen, hohlen Segmenten (130) umfaßt, wobei jedes hohle Segment ein Paar hohler Hülsen (132, 134) aufweist, die jeweils zu den benachbarten respektiven, parallelen Oberflächen offen sind.

3. Kunststoffpalette nach Anspruch 2, dadurch gekennzeichnet, daß jedes Segment aus drei im Abstand angeordneten Wänden (136, 138) besteht, die mit einem Paar Seitenwände (140) und einem ersten Paar beabstandeter Wände einheitlich ausgebildet sind, und die genannten Seitenwände eine Endwand (144) aufweisen, die einer ersten der genannten Oberflächen und einem zweiten Paar beabstandeter Wände benachbart ist, und die genannten Seitenwände eine Endwand (152) nahe einer zweiten der genannten Oberflächen aufweisen.

4. Kunststoffpalette nach den Ansprüchen 1, 2 oder 3, ferner dadurch gekennzeichnet, daß das genannte Durchbrechungsmittel (214) ein im allgemeinen U-förmiges, ringförmiges Segment (204) umfaßt, welches einen Anschlag (212) bildet, der eine Öffnung (214) umgibt, die den genannten Verbinder und Verbindungsmittel (202) aufnimmt, welche das genannte ringförmige Segment (204) entlang einer der genannten Oberflächen (160, 162) verbinden.

## Revendications

1. Palette en matière plastique comprenant une paire de plateaux (120) pratiquement identiques reliés par plusieurs raccords (14) avec des moyens orifices (214) au moins à chaque coin desdits plateaux recevant lesdits raccords, chaque plateau comprenant une structure globalement rectangulaire, moulée d'une seule pièce, ayant des surfaces distantes globalement parallèles (160, 162), caractérisée par lesdites surfaces parallèles (160, 162) étant entourées par des moyens de renfort périphériques (180), lesdits moyens de renfort périphériques comprenant plusieurs segments rectangulaires creux (182) pratiquement identiques, définis par des parois d'extrémité opposées (184, 186) et par des parois latérales opposées (188) avec une paroi de raccordement (190) reliant un bord de chacune desdites parois d'extrémité et latérales, ladite paroi de raccordement (190) étant inclinée par rapport auxdites surfaces de plateaux (160, 162) et présentant une pente depuis une desdites parois d'extrémité vers ladite autre paroi d'extrémité, et des goussets de renfort (192, 194) faisant partie intégrante deladite paroi de raccordement et de l'une respective desdites parois latérales opposées.

2. Palette en matière plastique selon la revendication 1, caractérisée, de plus, par chacun desdits plateaux comprenant plusieurs segments creux pratiquement identiques (130) avec chaque segment creux comprenant une paire de coquilles creuses (132, 134) respectivement ouvertes adjacentes aux surfaces parallèles respectives.

3. Palette en matière plastique selon la revendication 2, caractérisée par chaque segment constitué de trois parois distantes (136, 138) faisant partie intégrante d'une paire de parois latérales (140) et d'une première paire de parois distantes et lesdites parois latérales comprenant une paroi d'extrémité (144) adjacente à une première desdites surfaces et une seconde paire de parois distantes et lesdites parois latérales comprenant une paroi d'extrémité (152) adjacente à une seconde desdites surfaces.

4. Palette en matière plastique selon les revendications 1, 2 ou 3, caractérisée, de plus, par lesdits moyens orifices (214) comprenant un segment annulaire globalement en forme de U (204) définissant une butée (212) entourant un orifice (214) qui reçoit ledit raccord et les moyens de raccordement (202) raccordant ledit segment annulaire (204) le long de l'un desdits plans (160, 162).
